# EUROPEAN PATENT APPLICATION

(11) **EP 2 407 741 A1**
(43) Date of publication of application: **18.01.2012**
(21) Application number: 10007269.3
(22) Date of filing: 14.07.2010
(51) Int. Cl.: F25J 3/06, B01D 53/00, C01B 31/20

(54) **Energy efficient production of CO2 out of combustion flue gases using single stage expansion and pumps for evaporation at elevated pressure**

(71) Applicant: Alstom Technology Ltd, 5400 Baden (CH)
(72) Inventor: Stallmann, Olaf, 55270 Essenheim (DE)
(74) Representative: Dreiss

(57) **Abstract**

A method and a plant for producing liquid CO₂ out of combustion flue gases wherein the flue gas is partially condensed in a single stage phase separation, the single stage phase separation comprising at least one heat exchanger (11,17) and a separation drum (19), wherein the at least one heat exchanger (11,17) is cooled by expanded offgas (23) and expanded liquid CO₂ (3.3) and wherein a first paid of the expanded CO₂ (3.3) is separated after having passed the at least one heat exchanger (17) into liquid CO₂ and gaseous CO₂ in an additional separation drum (33), wherein the gaseous CO₂ (3.4) and the liquid CO₂ (3.5) of the additional separation drum (33) are expanded to a first pressure level (flag 7d') wherein a second part of the liquid CO₂ (3.6) of the separation drum (33) is expanded to a second pressure level (flag 7e') for cooling the flue gas in the at least one heat exchanger (17).

## Description

The invention relates to a method and a device for the liquefaction of the CO₂ contained in the flue gases. The liquefaction of CO₂ out of flue gases has been known for quite a long time.

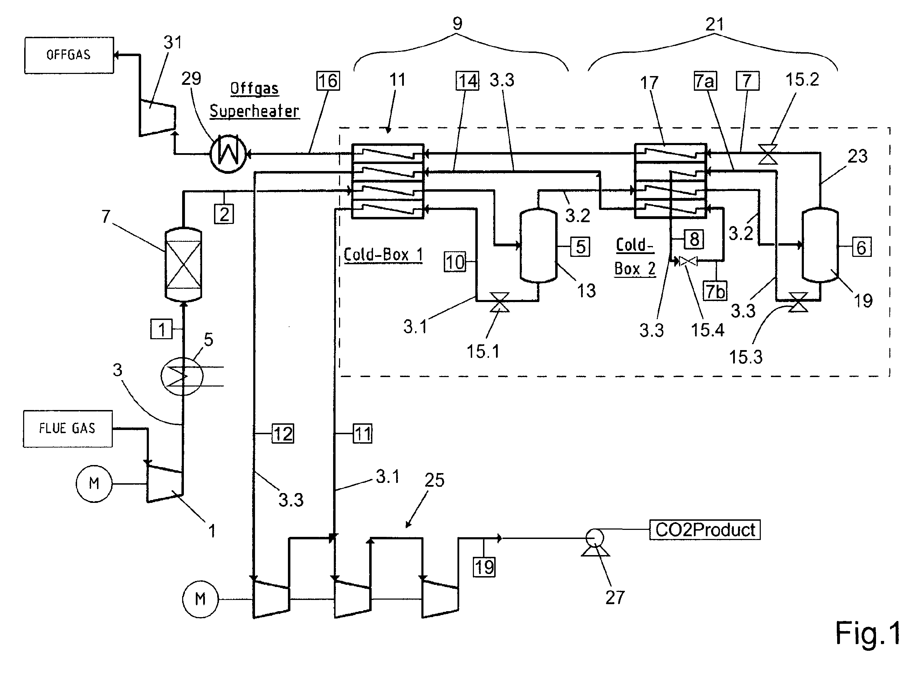

Most cryogenic methods for the production of CO₂ out of combustion flue gases use conventional separation schemes having two or more separation stages. In figure 1 such a prior art installation is shown as block diagram.

In the figures of this application the temperature and the pressure at various points of the flue gas stream as well as of the CO₂ are indicated by so-called flags. The temperatures and the pressures belonging to each flag are compiled in a chart in the following. It is obvious for a man skilled in the art that these temperatures and pressures are meant as an example. They can vary depending on the composition of the flue gas, the ambient temperature and the requested purity of the liquid CO₂.

In a first compressor 1 the flue gas is compressed. This compression can be a multi-stage compression process with coolers and water separators between each compression stage (not shown) separating most of the water vapour resp. water from the flue gas.

In figure 1 the flue gas stream is designated with reference numeral 3. When being emitted by the first compressor 1 the flue gas has a temperature significantly higher than the ambient temperature and then is cooled to approximately 13°C by a first cooler 5. The pressure is approximately 35.7 bar.

The moisture still contained in the flue gas stream 3 is freed from water by a suitable drying process e. g. adsorption dried in a drier 7 and subsequently conveyed to a first separation stage 9. This first separation stage 9 comprises a first heat exchanger 11 and an intermediate separation drum 13. The first heat exchanger 11 serves for cooling the flue gas stream 3. As a result of this cooling a partial condensation of the CO₂ contained in the flue gas stream 3 takes place. Consequently, the flue gas stream 3 enters the intermediate separation drum 13 as a two-phase mixture. There the liquid phase and the gaseous phase of the flue gas stream are separated by means of gravitation.

In the first separation drum the pressure is approximately 34,7 bar and the temperature is -19°C (cf. flag no. 5).

At the bottom of the intermediate separation drum 13 liquid CO₂ is extracted and via a first pressure reducing valve 15.1 expanded to a pressure of approximately 18.4 bar (cf. ref. No. 3.1). This results in a temperature of the CO₂ between -22°C and -29°C (cf. flag no. 10). The partial CO₂ stream 3.1 of the flue gas is heated and evaporated in the first heat exchanger 11 by the flue gas stream 3. At the exit of the first heat exchanger 11 the partial stream 3.1 has a temperature of approximately 25°C and a pressure of approximately 18 bar (cf. flag no. 11).

Following the second partial stream 3.2 being extracted at the head of the intermediate separation drum 13 it becomes clear that this partial stream 3.2 being extracted from the intermediate separation drum 13 in a gaseous state is cooled in a second heat exchanger 17 and partially condensed. Afterwards this partial stream 3.2 being also present as two-phase mixture is conveyed to a second separation drum 19. The second heat exchanger 17 and the second separation drum 19 are the main components of the second separation stage 21.

In the second separation drum 19 again a gravity-supported separation between the liquid phase and the gaseous phase of the partial stream 3.2 takes place. In the second separation drum 19 there is a pressure of approximately 34,3 bar and a temperature of approximately -50°C (cf. flag no. 6).

The gaseous phase in the second separation drum 19, the so-called offgas 23, is extracted at the head of the second separation drum 19, expanded to approximately 27 bar in a second pressure reducing valve 15.2, so that it cools down to approximately -54°C (cf. flag no. 7).

In the figures the offgas is designated with reference numeral 23. The offgas 23 streams through the second heat exchanger 17 thereby cooling the flue gas 3.2 in the counter stream.

At the bottom of the second separation drum 19 liquid CO₂ (c. f. ref. num. 3.3) is extracted and expanded to approximately 17 bar in a third pressure reducing valve 15.3, so that it reaches a temperature of -54°C as well (cf. flag no. 7a). This stream 3.3 as well is conveyed to the second heat exchanger 17. In the second heat exchanger 17 a part of the liquid CO₂ evaporates and stream 3.3 is expanded to approximately 5 to 10 bar in a fourth pressure reducing valve 15.4, so that at this point a temperature of -54°C is reached (cf. flag no. 7b) and the stream 3.3 is again conveyed to the second heat exchanger 17.

After the stream 3.3 streamed through the second heat exchanger 17, it again is conveyed to the first heat exchanger 11. At the entrance of the first heat exchanger 11 this stream has a pressure of approximately 5 to 10 bar with a temperature of -22 to -29°C (cf. flag no. 14).

This stream 3.3 takes up heat in the first heat exchanger 11, so that at the exit of same it has a temperature of approximately -7°C with a pressure of approximately 5 to 10 bar. The third stream 3.3 is conveyed to a second compressor 25 at the first compressor stage, whereas the stream 3.1 having a pressure of approximately 18 bar is conveyed to the second compressor stage at the three-stage compressor 25 shown in figure 1.

Intercooler between the various stages of the second compressor 25 and an aftercooler for the compressed CO₂ are not shown in figure 1.

At the exit of the second compressor 25 the compressed CO₂ has a pressure of between 60 bar and 110 bar with temperatures of 80°C to 130°C. In the aftercooler, which is not shown, the CO₂ is cooled down to ambient temperature.

If necessary the CO₂ can be either fed directly into the pipeline or liquefied and conveyed from a first CO₂ pump 27 e. g. into a pipeline (not shown). The first CO₂ pump 27 raises the pressure of the liquid CO₂ to the pressure given in the pipeline.

Going back to the offgas 23 it can be seen that the offgas streams through the second heat exchanger 17 and the first heat exchanger 11, thereby taking up heat from the flue gas stream 3. At the exit of the first heat exchanger 11 the offgas 23 has a temperature of approximately 26°C to 30°C and a pressure of approximately 26 bars (cf. flag no. 16).

For maximising the energy recovery it is known to overheat the offgas 23 with an offgas superheater 29 and then convey it to a expansion turbine 31 or any other expansion machine. Wherein mechanical energy is recycled and afterwards the offgas is emitted into the surroundings with a low pressure approximately corresponding to the surrounding pressure.

This installation described by means of figure 1 for liquefying CO₂ is relatively simple and works without problems. The disadvantage of this prior art production of liquid CO₂ out of flue gas of power plants e. g. fuelled with fossils is its high energy demand having negative effects on the net efficiency degree of the power plant.

Thus the invention has the object to provide a method and an installation for liquefying the CO₂ contained in the flue gas operating with a reduced energy demand and thus increasing the net efficiency degree of the power plant.

At the same time the method should be as simple as possible and the operation technique favourably controllable in order to guarantee a robust and trouble-free operation.

According to the invention this object is solved with a method for producing liquid CO2 out of combustion flue gases wherein the flue gas is partially condensed in a single stage phase separation, the single stage phase separation comprising at least one heat exchanger and a separation drum, wherein the at least one heat exchanger is cooled by expanded offgas and expanded liquid CO2 and wherein a part of the CO₂ is expanded to a first pressure level and is separated after having passed the at least one heat exchanger into liquid CO2 and gaseous CO2 in an additional separation drum, wherein the gaseous CO2 and the liquid CO2 of the additional separation drum are expanded to a second pressure level. A second part of the liquid CO2 of the separation drum is expanded to a third pressure level for cooling the CO2 in the at least one heat exchanger.

Due to the reduced volume flow resulting from evaporation of the CO₂ at a higher pressure level the result is a considerable reduction of the required power for the second compressor 25 having the direct effect of an improved net efficiency degree of the upstream power plant.

A further advantageous embodiment of the claimed invention comprises the step that the pressure of a third part of the liquid CO2 of the first separation drum is raised to a fourth pressure level for cooling the CO2 in the at least one heat exchanger.

This CO₂ stream then can be fed to the compressor 25 at an even higher compression stage resulting in a further reduced power consumption.

It is preferred that the second part of the liquid CO2 of this separation drum is expanded to a pressure of approximately 15 bar to 25 bar, preferably to 20 bar. This pressure range matches with the common compression ratios usually applied for centrifugal compressors.

A further advantageous embodiment of the claimed method comprises that the third part of the liquid CO2 of the first separation drum is raised to a pressure of approximately 40 bar to 50 bar, preferably to 45 bar.

These pressure levels allow an energy efficient operation of the plant on the one hand while keeping commercially available compression ratios and allow to run the plant at different operating points depending for example on the required quality of CO2 and/or ambient temperature.

It is also advantageous to use the partial streams of CO2 from the separation drums for cooling purposes in the at least one heat exchanger.

By using these CO2 streams for cooling purposes it can be avoided to use flammable cooling media, which results in a reduced danger of fire and minimizes the costs for security systems.

By feeding the CO2 streams to different stages of a second compressor depending on their pressure level a reduction of the energy consumption is achieved.

Compressing the flue gas (3) in a first compressor and then cooling it in a first cooler and/or drying it in a drier before entering the at least one heat exchanger reduces the volume of the flue gas, since most of the water vapour has been separated. This means that the size of the drier and the plant for producing liquid CO₂ can be smaller resulting in reduced energy losses and reduced costs.

By expanding the offgas from the last separation stage to approximately 27 bar and resulting in a temperature of approximately -54 °C before entering the at least one heat exchanger the pressure level after expansion is as high as possible thus maximizing the energy recovery in the expander.

A further reduction of the energy consumption can be achieved by expanding the offgas after having passed the at least heat exchanger in at least one expansion machine and subsequently feeding it again to the at least one heat exchanger.

Optionally the offgas 23 can be superheated after having passed the at least heat exchanger and before entering the at least one expansion machine. If waste heat can be used for superheating, the output of the expansion machine can be increased resulting in an better overall efficiency of the plant.

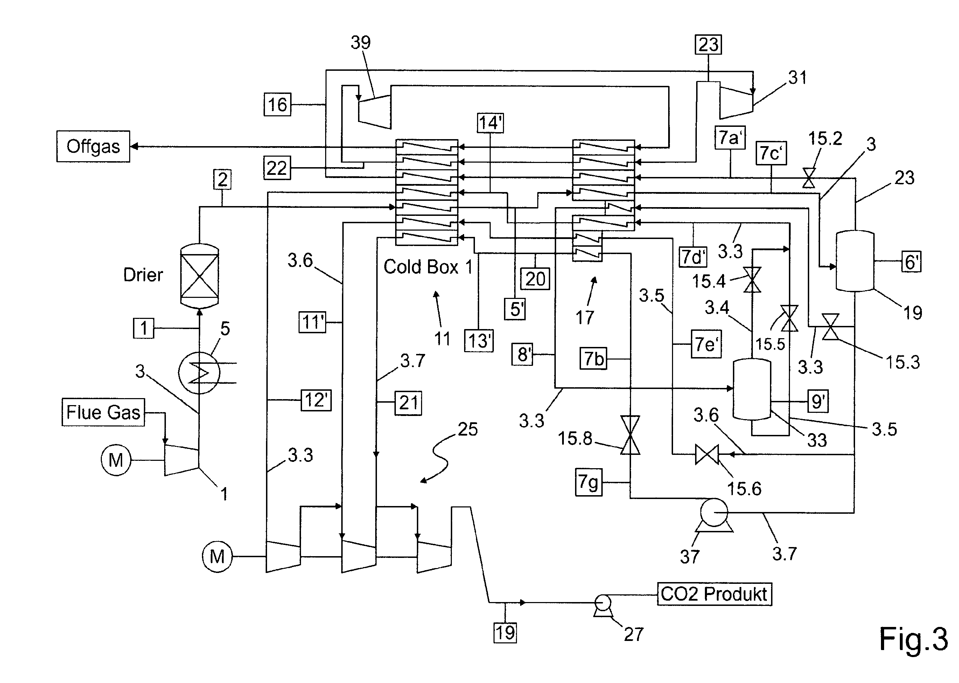

Preferably two expansion stages are to be used (c. f. fig. 3) thus maximizing the amount of CO₂ that can be directed to the third and fourth pressure level.

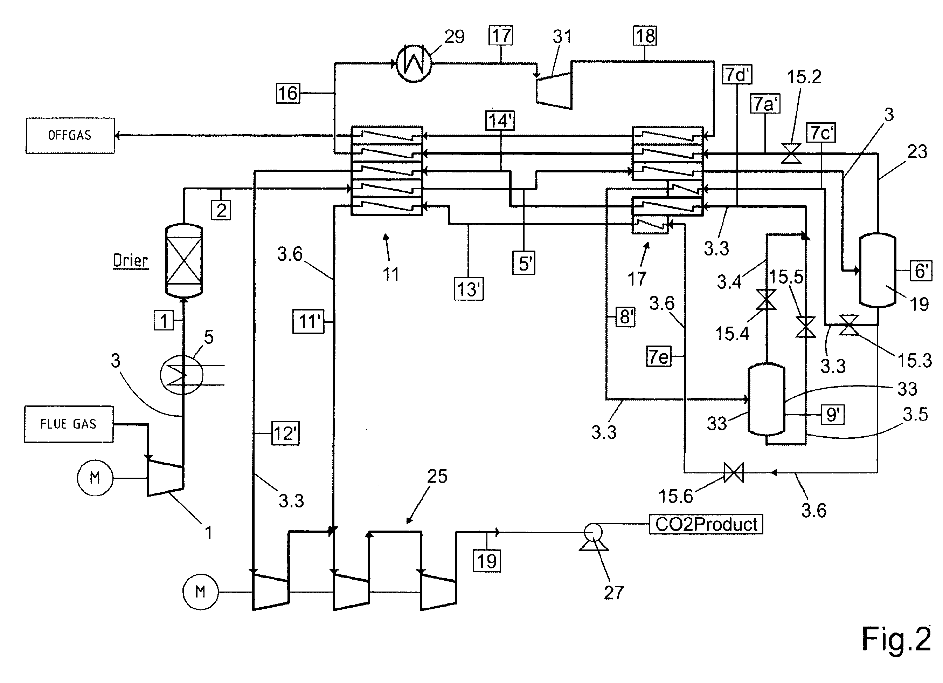

Further advantages of the claimed invention are explained in connection with figures 2 and 3 in the following.

### Drawings

Shown are in:
- Figure 1: an installation for CO₂ liquefaction out of flue gases according to the prior art and
- Figures 2 and 3: embodiments of installations for CO₂ liquefaction according to the invention.

### Description of the Drawings

In figure 2 identical components are designated with identical reference numerals. The statements concerning figure 1 correspondingly apply.

The treatment of the flue gas stream 3 in the first compressor 1, the first cooler 5, the drier 7, the first heat exchanger 11 takes place as described by means of figure 1. The flue gas stream 3 flows from the first heat exchanger 11 directly to the second heat exchanger 17 and is then conveyed to the now first separation drum19. The two phases (liquid and gaseous) of the flue gas stream 3 are divided in the first separation drum 19 into the offgas stream 23 and a partial stream of liquid CO₂. At the bottom of the first separation drum 19 this partial stream is extracted and has the reference numeral 3.3 such as in figure 1.

As already explained in the description of figure 1, the partial stream 3.3 is expanded to a pressure of 17,5 bar in a third pressure reducing valve 15.3, thereby cooling down to -54°C. The partial stream 3.3 streams through the second heat exchanger 17, thereby taking up heat from the flue gas stream 3 and enters with a temperature of approximately - 47°C (cf. flag no. 8') into a second separation drum 33.

There the partially liquid and partially gaseous CO₂ has a pressure of approximately 16,5 bar and a temperature of -47 °C (cf. flag no. 9').

In the head of the second separation drum 33 the gaseous phase is extracted and expanded in a fourth pressure reducing valve 15.4. The gaseous partial stream being extracted at the head of the second separation drum 33 is designated with reference numeral 3.4 in figure 2.

At the bottom of the second separation drum 33 a liquid stream 3.5 is extracted and expanded in a fifth pressure reducing valve 15.5. Subsequently the partial streams 3.4 and 3.5 are brought together again. Then they have a pressure of approximately 5 to 10 bar and a temperature of -54 °C (cf. flag no. 7d').

A second portion 3.6 of the CO₂ from the first separation drum 19 is expanded via a sixth pressure reducing valve 15.6 to a pressure of ≈ 23 bar (c. f. flag 7e') and returned to the exchanger 17 at an intermediate entry point.

With this partially liquid, partially gaseous CO₂ the flue gas stream 3 in the second heat exchanger 17 is cooled.

As the entrance temperature of the partial stream 3.6 is higher than the entrance temperatures of the offgas 23 as well as the partial stream 3.3, the flue das stream 3 first is cooled with the partial stream 3.6. Thus it is possible to take up heat from the flue gas stream 3 even with this higher temperature of -45°C. In figure 2 this fact is illustrated by the position of the heat exchanging area of the partial stream 3.6.

The partial stream 3.6 leaves the second heat exchanger 17 with a temperature of approximately -22°C to -29°C (cf. flag no. 13') and is then conveyed directly the first heat exchanger 11. In the first heat exchanger 11 the partial stream 3.6 takes up heat from the flue gas stream 3. The partial stream 3.6 leaves the first heat exchanger (cf. flag no. 11') with a temperature of approximately 25°C and a pressure of approximately 18 bar and can thus be conveyed to the second compression stage of the second compressor 25.

As the partial stream 3.6 can be conveyed to the second compression stage of the second compressor 25, the partial stream 3.3, which has to be conveyed to the first compression stage of the second compressor 25, is correspondingly reduced. Consequently the power required by the second compressor 25 is smaller. This has positive effects on the energy demand of the installation according to the invention.

Occasionally the remainder 3.7 of the liquid CO₂ from the first separation drum 19 is pumped (c. f. ref. number 37) to a pressure of ≈ 45 bar (c. f. flag 7g) with the CO₂ pump 37 and returned to exchanger 17 also at an intermediate entry point.

Parallel to the partial stream 3.6 a further partial stream 3.7 flows through the second heat exchanger 17 and the first heat exchanger 11. The partial stream 3.7 is driven by a CO2 pump 37 and brought to an increased pressure level of approx. 45 bar (cf. flag no. 7g). An eighth valve 15.8 serves to control the amount of CO2 that is pumped by the Co2 pump 37.

As the entrance temperatures of the partial streams 3.6 and 3.7 are higher than the entrance temperatures of the offgas 23 as well as the partial stream 3.3, the flue gas stream 3 first is cooled with the partial streams 3.6 and 3.7. Thus it is possible to take up heat from the flue gas stream 3 even with the a. m. higher temperature. In figure 2 this fact is illustrated by the position of the heat exchanging area of the partial stream 3.7.

The partial stream 3.7 leaves the second heat exchanger 17 with a temperature of approximately -22°C to -29°C (cf. flag no. 20) and is then conveyed directly the first heat exchanger 11. In the first heat exchanger 11 the partial stream 3.7 takes up heat from the flue gas stream 3. The partial stream 3.7 leaves the first heat exchanger (cf. flag no. 21) with a temperature of approximately 25°C and a pressure of approximately 44 bar and can thus be conveyed after the second and before the third compression stage of the second compressor 25.

As the partial stream 3.7 can be conveyed to the third compression stage of the second compressor 25, the partial stream 3.3, which has to be conveyed to the first compression stage of the second compressor 25, is correspondingly reduced. Consequently the power required by the second compressor 25 is smaller. This has positive effects on the energy demand of the installation according to the invention.

Extraction of partial stream 3.7 is possible when the off-gas energy is used by at least double expansion via expanders 31 and 39 as shown in figure 3. This maximizes the cold recovery from the off-gas as described later.

All liquid or two phase CO₂ streams (3.3, 3.6., 3.7) are evaporated in exchanger 17 and 11 before being sent to CO₂ recompressor or second compressor 25. Depending on the pressure level the CO₂ streams are fed at different compression stages of the second compressor 25.

Using different pressure levels for the evaporation of the CO₂ has several advantages: It gives better control over the flue gas condensation. Furthermore the overall compression requirements can be minimized having CO₂ at elevated pressures readily available.

A further possibility of reducing the energy demand of the CO₂ liquefaction plant can be seen in not only overheating the offgas 23 in the offgas superheater 19 after the exit from the first heat exchanger 11, but also reconvey it to the second heat exchanger 17 after the expansion in the expansion turbine 31. After the overheating the offgas has a temperature of approximately 80°C to approximately 100°C with a pressure of approximately 26 bar (cf. flag no. 17).

By the expansion in the first expansion machine 31 the pressure drops to 2.3 bar and the offgas 23 reaches a temperature of -54°C. Thus the offgas 23 can once more contribute to the cooling of the flue gas stream 3 resp. the partial stream 3.2. Afterwards the offgas 23 can be emitted to the surroundings with a low pressure and approximately surrounding temperature.

It is also possible to carry out a multi-stage expansion and overheating of the offgas 23 as is shown in figure 3.

In the embodiment shown in figure 3 the offgas 23 is but sent directly after the exit from the first heat exchanger 11 to the first expansion turbine 31 and further to the second heat exchanger 17. From the second heat exchanger 17 the offgas flows through the first heat exchanger 11.

Before entering the first expansion turbine 31 the offgas has a temperature of approximately 30°C with a pressure of approximately 26 bar (cf. flag no. 16). Due to the expansion in the first expansion machine 31 the pressure drops to 8 bar and the offgas reaches a temperature of - 54°C.

The second stage of expansion comprises a second expansion turbine 39. Before entering the second expansion machine 39 the offgas 23 has temperature of approximately 30 °C (cf. flag 22). Due to the expansion in the second expansion machine 39 the pressure drops to 2 bar and the offgas reaches a temperature of -47°C (cf. flag 23).

Thus the offgas 23 can once more contribute to the cooling of the flue gas stream 3 resp. the partial stream 3.2. Afterwards the offgas 23 can be emitted to the surroundings with a low pressure and approximately surrounding temperature.

The single or multi-stage expansion as well results in a considerable reduction of the energy demand of the installation according to the invention, as on the one hand the offgas 23 contributes to a greater amount to the cooling of the flue gas stream 3 resp. the partial stream 3.2 and the expansion machine 31 and/or 39 generate mechanical work, which e. g. can be used for driving the first compressor 1 or the second compressor 25. All in all it can be stated that the method according to the invention and the installation for CO₂ liquefaction required for carrying out the method according to the invention are still relatively simple in their design in spite of the considerable advantages.

Furthermore, this setup clearly improves the control over the flue gas condensation. With adjustment of the flow rate over the CO₂ pump 37 and the valves 15. 6 and 15.3 the driving force for heat transfer, the Logarithmic Mean Temperature Difference (LMTD), is varied. In this way the performance of the separation stage can be adjusted. This is especially important, when operating at condensation temperatures near the sublimation and freezing point of CO₂.

In order to maximize the described effect, the heat recovery out of the offgas from separation can be increased by having the vent gas/offgas 23 recirculated to the cold box after expansion, at least once before releasing it to the atmosphere.

**Table of flags, pressures and temperatures.**

| Flag no. | Temperature, approx. | Pressure, approx. |
|---|---|---|
| | [°C] | [bar] |
| 1 | 13 | 35,7 |
| 2 | 13 | 35 |
| 5 | -19 | 34,7 |
| 5' | -19 | 34,7 |
| 6 | -51 | 34,3 |
| 6' | -51 | 34,3 |
| 7¹ | -54 °C | 27 |
| 7a | -54 | 17 |
| 7a' | -54 | 27 |
| 7b | -54 | 5 to 10 |
| 7b' | -48 | 44 |
| 7c | -54 | 17,5 |
| 7c' | -54 | 17,5 |
| 7d | -54 | 5 to 10 |
| 7d' | -54 | 5 to 10 |
| 7e | -45 | *≈20 to 23* |
| 7g | -47 | 45 |
| 7h | -47 | 44 |
| 8 | -47 | 16,5 |
| 8' | -47 | 16,5 |
| 9 | -47 | 16,5 |
| 9' | -47 | 16,5 |
| 10 | - 22 to - 29 | 20,5 |
| 11 | 25 | 20 |
| 11' | 26 to 30 | 19 |
| 12 | -7 | 5-10 |
| 12' | -7 | 5 to 10 |
| 13 | -22 to -29 | 20 |
| 14 | -22 to -29 | 5-10 |
| 16 | 26 to 30 | 26 |
| 17 | 80 to 100 | 25,8 |
| 18 | -54 | 2,3 |
| 19 | 80 to 130 | 60 to 110 |
| 20 | -22 to -29 | 43,5 |
| 21 | 26 to 30 | 43 |
| 22 | 26 to 30 | 7 |
| | The tolerances for the temperatures are ± 5°C | The tolerances for the pressures are ± 5 bar |

| | | |
|---|---|---|
| ¹ Ist das Offgas 23 in Figur 1 | | |

## Claims

1. Method for producing liquid CO₂ out of combustion flue gases wherein the flue gas is partially condensed in a single stage phase separation, the single stage phase separation comprising at least one heat exchanger (11, 17) and a separation drum (19), wherein the at least one heat exchanger (11, 17) is cooled by expanded offgas (23) and expanded liquid CO₂ (3.3) and wherein the expanded CO₂ (3.3) is separated after having passed the at least one heat exchanger (17) into liquid CO₂ and gaseous CO₂ in an additional separation drum (33), wherein the gaseous CO₂ (3.4) and a first part of the liquid CO₂ (3.5) of the additional separation drum (33) are expanded to a first pressure level (flag 7d') wherein the pressure of a second part of the liquid CO₂ (3.6) of the additional separation drum (33) is expanded to a second pressure level (flag 7e') for cooling the CO₂ in the at least one heat exchanger (17).

2. Method according to claim 1, **characterized in, that** the pressure of a fourth part of the liquid CO₂ (3.7) of the first separation drum (33) is raised to a fourth pressure level (flag 7g) and expanded (flag 7h) for cooling the CO₂ in the at least one heat exchanger (17).

3. Method according to claim 2, **characterized in, that** the fourth part of the liquid CO₂ (3.7) of the additional separation drum (33) is raised to a pressure of approximately 40 bar to 50 bar, preferably to 47 bar (flags 7h and 20).

4. Method according to one of the foregoing claims, **characterized in, that** the partial streams of CO₂ (3.3, 3.6. 3.7) from the separation drums (19, 33) are used for cooling purposes in the at least one heat exchanger (17, 11).

5. Method according to one of the foregoing claims, **characterized in, that** the CO₂ streams (3.3, 3.6, 3.7) are fed to different stages of a second compressor (25) depending on the pressure of the CO₂ streams (3.3, 3.6, 3.7).

6. Method according to one of the foregoing claims, **characterized in, that** the flue gas (3) is compressed in a first compressor (1), cooled in a first cooler (5) and/or dried in a drier (7) before entering the at least one heat exchanger (11, 17).

7. Method according to one of the foregoing claims, **characterized in, that** offgas (23) from the last separation stage (21) is expanded to approximately 27 bar and resulting in a temperature of approximately - 54 °C before entering the at least one heat exchanger (17).

8. Method according to one of the foregoing claims (), **characterized in, that** the offgas (23) after having passed the at least heat exchanger (11, 17) is expanded in at least one expansion machine (31, 39) and subsequently fed again to the at least one heat exchanger (17, 11).

9. Method according to one of the foregoing claims (), **characterized in, that** the offgas (23) is superheated in a superheater (29) after having passed the at least heat exchanger (11, 17) and before entering the at least one expansion machine (31, 39).

10. Plant for producing liquid CO₂ out of combustion flue gases wherein the flue gas (3) is partially condensed in at one heat exchanger (11, 17), separation drums (19, 33), several pressure reducing valves (15) and a second multi-stage compressor (25).

11. Plant according to claim 10, **characterized in, that** it comprises at least one CO₂ pump (37)

12. Plant according to claim 10 or 11, **characterized in, that** it comprises at least one expansion machine (31, 39).

13. Plant according to claims 10 to 12, **characterized in, that** it comprises at least one offgas superheater (29).

14. Plant according to claims 10 to 13, **characterized in, that** it comprises a first compressor (1), a first cooler (5) and a drier (7).
